# EUROPÄISCHE PATENTSCHRIFT

(11) **EP 1 155 939 B1**
(45) Veröffentlichungstag und Bekanntmachung des Hinweises auf die Patenterteilung: **16.11.2005**
(21) Anmeldenummer: 01105857.5
(22) Anmeldetag: 09.03.2001
(51) Int. Cl.: B62D 1/04

(54) **Lenker für ein Flurförderzeug**
Steering wheel for an industrial truck
Volant pour un chariot de manutention

(30) Priorität: 18.05.2000 DE 10024455
(43) Veröffentlichungstag der Anmeldung: 21.11.2001
(73) Patentinhaber: Jungheinrich Aktiengesellschaft, 22047 Hamburg (DE)
(72) Erfinder: Prehn, Volkmar, 24558 Henstedt Ulzburg (DE); Hestermann, Kai, 24105 Kiel (DE)
(74) Vertreter: Hauck, Graalfs, Wehnert, Döring, Siemons

(56) Entgegenhaltungen:
- EP-A- 1 046 565
- US-A- 4 667 909
- PATENT ABSTRACTS OF JAPAN vol. 1999, no. 08, 30. Juni 1999 (1999-06-30) -& JP 11 059434 A (HONDA MOTOR CO LTD), 2. März 1999 (1999-03-02)

## Beschreibung

Die Erfindung bezieht sich auf ein Flurförderzeug mit Hilfskraftlenkung nach dem Oberbegriff des Patentanspruchs 1.

Sogenannte Kommissionierfahrzeuge besitzen üblicherweise einen Fahrerstand mit Deichsel- oder Lenkradlenkung. Die Deichsellenkung hat den Vorteil, daß der stehende Fahrer die Lenk- und Fahrbewegung mit einer Hand bedienen kann. Hierbei wird aber in engen Kurven eine ergonomisch sehr ungünstige Körperhaltung erzwungen. Bei der Lenkradlenkung kann der Fahrer auch in Kurven seine normale Bedienposition beibehalten. Er benötigt aber die zweite Hand, um einen Fahrsignalgeber zu betätigen. Der Fahrer kann sich dabei mit dieser Hand gleichzeitig an einem Handgriff festhalten. Beim Rückwärtsfahren wird diese Bedienung allerdings zum Nachteil, da der Fahrer sich nicht wie bei der Einhandbedienung halb nach hinten gedreht hinstellen kann. Dieser Nachteil der Lenkradlenkung läßt sich durch einen zweiten Fahrsignalgeber in der Rückenlehne des Fahrerstands beseitigen. Trotzdem bleibt der Wunsch bestehen, das Fahrzeug mit nur einer Hand zu bedienen. Die zweite Hand hält oftmals Hilfsmittel, die man nicht immer weglegen und neu ergreifen möchte, wie z. B. Auftragslisten, Stifte, Messer oder Aufkleber.

Aus dem gattungsbildenden DE 196 15 168 A1 ist ein Lenker der eingangs genannten Art für ein Kommissionierfahrzeug bekannt geworden, bei dem die Vorteile der Deichsellenkung mit denen der Lenkradlenkung verbunden werden sollen. Hierbei wird eine Hilfskraftlenkung vorausgesetzt. Ein mittlerer Teil des Lenkers ist annähernd um eine vertikale Achse drehbar gelagert, und Handgriffe stehen zu gegenüberliegenden Seiten vom Mittelteil fort. Zwischen dem Mittelteil und den Handgriffen sind Fahrschalter angeordnet sowie zusätzliche Tasten für Hub- und Notstoppfunktionen.

Da auch eine elektrische Lenkung nicht zu direkt reagieren darf, muß der Lenker einen deutlichen Schwenkwinkel ausführen, etwa ± 80°. Das gelenkte Rad bei einem derartigen Fahrzeug muß einen Lenkwinkel von etwa ± 90° ausführen. In der Praxis ergibt sich hieraus ein unangenehmes direktes Lenkverhalten. Gleichzeitig erzwingt der Lenker in den Endlagen eine unangenehm große Verdrehung der Handgelenke. Bei einer federnden Rückstellung und relativ geringen Lenkkräften kann die bekannte Lenkung gleichwohl zufriedenstellend bedient werden.

Ein weiter Nachteil des bekannten Lenkers ist die im Wesentlichen senkrechte Drehachse. Wenn der Fahrer sich nicht ausreichend an der Rückenlehne abstützt und mit nur einer Hand das Fahrzeug beschleunigt oder abbremst, führt die Reaktionskraft zu ungewollten Lenkbewegungen. Der Fahrer darf sich nicht bei Einhandbedienung am Lenker abstützen, da er sonst eine ungewollte Auslenkung des Lenkers herbeiführt.

Aus der Firmenschrift "ESGL-Mini" der Firma Genkinger Hebe- und Fördertechnik GmbH ist in Verbindung mit einem Hochhubkommissionierer bekannt geworden, ein schiffssteuerradähnliches Lenkrad zu verwenden. Der Lenkkranz ist mit einem annähernd dreieckförmigen verdickten Lagerbauteil verbunden, der um eine horizontale Achse drehbar ist. In der 12 Uhr-Position des Lenkkranzes ist ein Fahrschalter integriert.

Aus US 4,667,909 ist ein Lenker für einen Helikopter bekannt geworden, bei dem von einem verdickten Ende der Lenkwelle zu gegenüberliegenden Seiten jeweils eine Speiche abgeht, die zum Benutzer hin gewinkelt sind. Am Ende der Speichen sind aufrecht stehende Griffabschnitte vorgesehen mit Drehknöpfen am oberen Ende zur Betätigung einer Funktion des Helikopters.

Aus JP 411059434A ist ein Lenker für Personenkraftwagen bekannt geworden mit einem ersten Abschnitt zur Betätigung eines Lenkgebers, seitlichen Ansätzen, die sich annähernd gleichachsig an die gegenüberliegende Seite von dem dem Fahrersitz nächstliegenden Bereich des ersten Abschnitts zur Seite forterstrecken und jeweils einem länglichen Griffabschnitt an den Enden des zugeordneten Ansatzes, die sich vom Ansatz forterstrecken. Der erste Abschnitt ist um eine zum Fahrer hin geneigte Achse drehbar gelagert und weist eine abgeflachte obere Fläche auf, die zum Fahrer hin geneigt ist.

Der Erfindung liegt die Aufgabe zugrunde, einen Lenker für ein Flurförderzeug zu schaffen, der sich sinnfällig, feinfühlig und mühelos betätigen läßt, wobei die Lenk- und Fahrfunktion auch nur von einer Hand betätigt werden soll und übliche Reaktionskräfte beim Beschleunigen und Bremsen nicht zu ungewollten Lenkbewegungen führen.

Diese Aufgabe wird durch die Merkmale des Patentanspruchs 1 gelöst.

Beim erfindungsgemäßen Lenker ist ein erster Abschnitt vorgesehen, der um eine annähernd dem Fahrer zugeneigten Achse in einem fahrzeugfesten Lager drehbar gelagert ist und der einen Lenkgeber für eine elektrische Hilfskraftlenkung betätigt. Der erste Abschnitt, der insoweit dem Mittelabschnitt nach der oben genannten Anordnung gleicht, weist eine abgeflachte obere Fläche auf, die zum Fahrer hin geneigt ist. Seitliche Ansätze erstrecken sich zu entgegengesetzten Seiten annähernd gleichachsig fort, an welche sich länglich Griffabschnitte anschließen, die sich vom Fahrerstand bzw. Fahrer fort in einem Winkel aufeinander zu erstrecken. Der Neigungswinkel der Drehachse des Lenkers und die Erstreckung der Griffabschnitte ist derart, daß der Fahrer, auf dem Fahrerstand stehend, die Griffabschnitte von der Außenseite mit annähernd aufrechtstehenden Fäusten erfassen kann. Kommt es aufgrund von Brems- und Beschleunigungsvorgängen zu entsprechenden Druck- und Zugkräften auf den Lenker, werden im Wesentlichen keine Drehkräfte um die Drehachse des Lenkers erzeugt, und zwar auch bei Einhanderfassung des Lenkers.

Ringförmige Schaltelemente sind an den Enden der Griffabschnitte angeordnet, wobei ihre Drehachse annähernd mit der Achse der Griffabschnitte zusammenfällt. Die ringförmigen Schaltelemente sind so ausgebildet, daß sie mit dem Daumen der Hand betätigbar sind, die den Griffabschnitt erfaßt. Nach einer Ausgestaltung der Erfindung können die Drehachsen der ringförmigen Schaltelemente einen Winkel von annähernd 90° einschließen.

Die weiter oben angegebene Bedingung für die Vermeidung von ungewollten Lenkbewegungen bei auftretenden Reaktionskräften wird unter anderem nach einer Ausgestaltung der Erfindung dann erfüllt, wenn die Drehachse des Lenkers annähernd in Richtung Schulter des Fahrers weist. Das entspricht einem Winkel von annähernd 40° bis 50° zur Senkrechten.

Nach einer anderen Ausgestaltung der Erfindung sind die Griffabschnitte im Querschnitt vorzugsweise rund und in der Längserstreckung leicht bogenförmig gestaltet, wobei sie nach außen eine konvexe und nach innen eine konkave Krümmung aufweisen. Sie bilden mithin einen Ringabschnitt eines kreisförmigen Lenkrades. Daher liegen die Griffabschnitte vorzugsweise annähernd auf einem Kreis, dessen Zentrum von der Drehachse des Lenkers gebildet ist. Die Lage der Griffabschnitte ist vorzugsweise dergestalt, daß die Griffpositionen annähernd bei 10 und 14 Uhr liegen. Dies bezieht sich auf eine Position des Lenkers bei Geradeausfahrt. Selbstverständlich verändern sich die Griffpositionen relativ zum Fahrerstand bzw. zum Fahrer, wenn ein Lenkeinschlag erfolgt.

Nach einer Ausgestaltung der Erfindung erstreckt sich ein speichenförmiger Abschnitt sich vom ersten Abschnitt zwischen den Griffabschnitten und in seitlichem Abstand zu diesen fort, der in den quer dazu verlaufenden ringabschnittförmigen dritten Griffabschnitt übergeht, dessen freie Enden an die ringförmigen Schaltelemente angrenzen und eine Fortsetzung der beiden seitlichen Griffabschnitte bilden, wobei die Außenseite des dritten Griffabschnitts eine annähernd durchgehende konvexe Fläche aufweist. Vorzugsweise ist zwischen den ersten Griffabschnitten, dem ersten Abschnitt, dem speichenförmigen Abschnitt und dem dritten Griffabschnitt jeweils eine annähernd elliptische Öffnung gebildet.

Um im Rangierbetrieb den maximalen Lenkerausschlag zu erreichen, von z. B. ± 120°, kann eine Hand den dritten Griffabschnitt in der 12 Uhrposition ergreifen und mit dem Daumen den zugeordneten Fahrschaltergriff betätigen. So lassen sich auch 120° Lenkerbewegung in einem Zug erreichen. Diese Greifposition ist auch für die Rückwärtsfahrt gut geeignet, da der Fahrer sich nach hinten wendet und die nach vorn schwenkende Hand eine ergonomisch günstige Stellung erreicht.

Die Erfindung wird nachfolgend anhand einer Zeichnung näher erläutert.

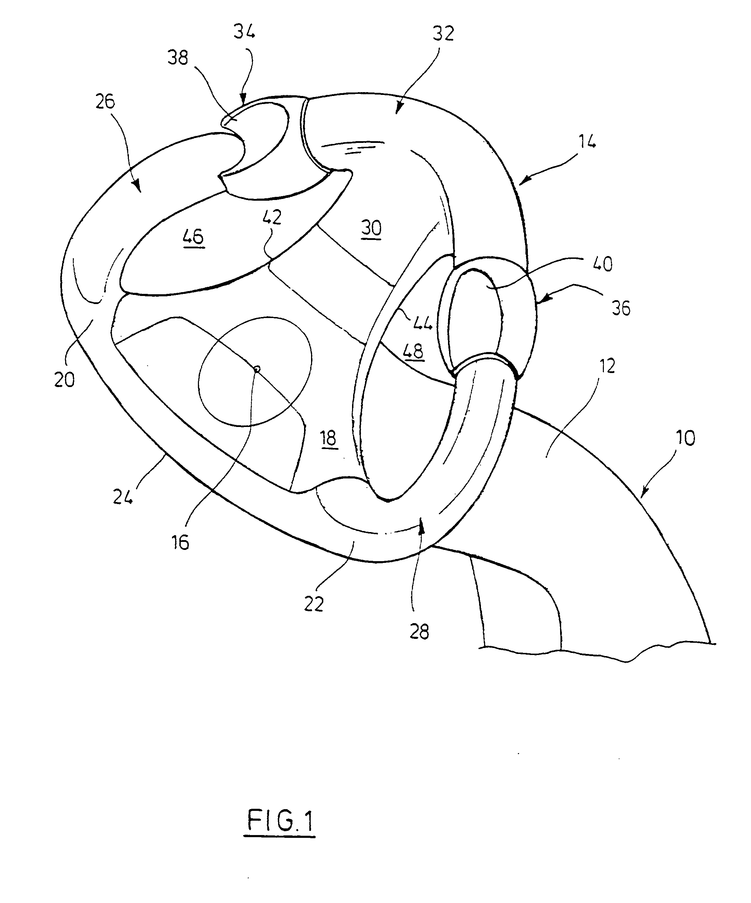

Die einzige Figur zeigt perspektivisch eine Ausführungsform eines Lenkers nach der Erfindung.

Zur gezeigten Ausführungsform ist zunächst allgemein zu bemerken, daß sie z. B. für einen Niederhubkommissionierer geeignet ist, der einen Fahrerstand aufweist mit einer Rückwand, die dem Antriebsteil zugeordnet ist und einer Vorderwand oder Brüstung, an der der Lenker drehbar gelagert ist. Die Hubgabel ist auf der der Vorderwand gegenüberliegenden Seite des Antriebsteils angeordnet, wobei der Fahrer normalerweise in Richtung Vorderwand schaut und in Blickrichtung fährt. Ein derartiger Kommissionierer ist etwa in der DE 196 15 168 dargestellt.

Wie bei dem bekannten Kommissionierer, wird auch bei der Erfindung vorausgesetzt, daß der Kommissionierer eine elektrische Hilfskraftlenkung hat. Der Lenker ist daher mit einem Lenkgeber verbunden, der den Drehwinkel des Lenkers in ein entsprechendes Steuersignal für den Lenkantrieb umwandelt, der seinerseits das zu lenkende Rad um den eingestellten Winkel verschwenkt.

In der Figur ist eine Säule 10 angedeutet, die am oberen Ende einen abgebogenen oder abgeknickten Abschnitt 12 aufweist. Die Säule befindet sich an der Vorderseite des Fahrerstandes eines nicht gezeigten Kommissionierers. Ein lenkradähnlicher Lenker 14 ist um eine Drehachse im Abschnitt 12 drehbar gelagert. Die Drehachse erstreckt sich etwa durch den mit 16 bezeichneten Punkt des Lenkers 14. Die Drehachse ist nach hinten zum Fahrer hin geneigt um einen Winkel von z. B. 45°. In dem nicht gezeigten Lager ist ein nicht gezeigter Lenkgeber angeordnet, der entsprechend dem Verdrehwinkel des Lenkers 14 ein elektrisches Signal erzeugt für eine ebenfalls nicht gezeigte Lenkkraftunterstützung.

Der in der Figur dargestellte Lenker 14 gleicht einem größeren Segment eines herkömmlichen Lenkrads.

Im einzelnen:
Der Lenker weist einen ersten Abschnitt 18 auf, der grob dreieckförmig ist und über den die Lagerung am Abschnitt 12 erfolgt. An gegenüberliegenden Seiten sind Ansätze 20, 22 am Abschnitt 18 angeformt, die annähernd gleichachsig sind. Die dem Fahrer zugekehrte Seite des Abschnitts 18 und der Ansätze 20, 22 ist leicht konvex gekrümmt, wie bei 24 angedeutet. Außerdem liegt eine kreisbogenförmige Krümmung im Querschnitt vor.

An die Ansätze 20, 22 sind Griffabschnitte 26, 28 angeformt. Die Griffabschnitte sind in Längsrichtung kreisbogenförmig und haben annähernd kreisförmige Querschnittskontur. Die freien Endabschnitte der Griffabschnitte 26, 28 laufen aufeinander zu und bilden einen Winkel, der etwa einem rechten Winkel entspricht oder etwas kleiner ist. Der Übergang von den Ansätzen 20, 22 zu den Griffabschnitten 26, 28 an der Außenseite ist ebenfalls kreisbogenförmig. Auch an der Innenseite ist eine entsprechende Rundung vorgesehen.

Am ersten Abschnitt 18 ist vom Fahrerstand forterstreckend, ein speichenförmiger Abschnitt 30 angeformt, der in einen dritten, quer verlaufend Griffabschnitt 32 übergeht. Der dritte Griffabschnitt 32 hat die Form eines Kreisbogenabschnitts. Die Enden des dritten Griffabschnitts 32 und die Enden der ersten Griffabschnitte 26, 28 sind annähernd zueinander ausgerichtet, haben jedoch einen Abstand voneinander. Dieser wird ausgefüllt durch ringförmige Schaltelemente 34, 36 von nicht gezeigten Schaltern. Die Schaltelemente 34, 36 , die z. B. an verjüngten Verlängerungen der Griffabschnitte 26, 28 drehbar gelagert und leicht tonnenförmig gestaltet sind, haben jedoch auf einer Seite eine Griffmulde 38 bzw. 40, die zum Griffabschnitt 26 bzw. 28 offen ist. Der Durchmesser der Schaltelemente 34, 36 ist insgesamt etwas größer als der der Griffabschnitte 26, 28 und des dritten Griffabschnitts 32 bis auf ihr Ende, das annähernd einen Durchmesser hat, der dem Durchmesser der angrenzenden Abschnitte der Griffabschnitte entspricht. Die Schaltelemente 34, 36 sind um eine Achse gelagert, welche der Achse der Enden der Griffabschnitte 26, 28 bzw. 32 entspricht. Die Schaltelemente 34, 36 betätigen Fahrschalter, d. h. eine Verdrehung bestimmt den Sollwert für die Fahrgeschwindigkeit. Die nicht gezeigte Rückseite der Schaltelemente 34, 36 weist eine Aufrauhung auf, beispielsweise achsparallele im Abstand angeordnete Nuten oder dergleichen.

Wie schon erwähnt, ist der Lenker 14, nach Art eines Lenkrads ausgebildet, dessen untere Hälfte nicht vollständig ist, so daß sich annähernd eine Halbkreisform ergibt. Die typischen Griffpositionen an den Griffabschnitten 26, 28 sind etwa auf 10 Uhr bzw. 14 Uhr vorgesehen. Dabei ergreift die Hand des Fahrers die Griffabschnitte 26, 28 von der Seite und teilweise von oben, so daß in dieser Griffposition der Daumen in die Mulde 38 bzw. 40 abgesenkt werden kann, um das Schaltelement 34 bzw. 36 zu betätigen. Die Lenkachse ist, wie bei Kraftfahrzeugen üblich, stark zum Fahrer hin geneigt und etwa auf die Höhe seiner Schultern gerichtet. Somit führt ein Ziehen oder Drücken der Arme nicht zu einer ungewollten Lenkbewegung des Lenkers 14. Daher kann der Fahrer auch bei Einhandbedienung die Reaktionskräfte beim Beschleunigen und Bremsen am Lenker problemlos abfangen.

Der Schwenkwinkel des Lenkers 14 beträgt etwa ± 120°. Hierbei wird die Lenkung auch bei einem mit ± 90° Lenkwinkel zu lenkenden Rad ausreichend feinfühlig. Der Lenker 14 soll federnd in die Mittellager zurückkehren, was hier jedoch nicht gezeigt ist. Durch die lenkradähnliche Griffsituation können Lenkerbewegungen von ± 90° mühelos und ohne Umgreifen ausgeführt werden. Um im Rangierbetrieb den maximalen Lenkerausschlag von 120° zu erreichen, kann z. B. die rechte Hand in der 12 Uhrposition den dritten Griffabschnitt 32 ergreifen und das linke Schaltelement 34 betätigen. So lässt sich auch eine 120° Lenkbewegung nach rechts in einem Zug ausführen. Gleichzeitig kann das Fahrsignal mit derselben Hand gesteuert werden. Diese Greifposition ist auch für die Rückwärtsfahrt gut geeignet, da der Fahrer sich nach hinten wendet und die nach vorn schwenkende Hand eine ergonomisch günstige Stellung erreicht. Um den dritten Griffabschnitt 32 gut erfassen zu können, ist er gegenüber dem speichenförmigen Abschnitt 30 leicht erhaben. Die nicht gezeigte Unterseite des dritten Griffabschnitts 32 kann ebenfalls eine Aufrauhung, Riffelung oder eine ähnliche unregelmäßige Oberfläche aufweisen.

Wie sich aus der Figur ergibt, ist durch den ersten Abschnitt 18 und den speichenförmigen Abschnitt 30 eine konkave Fläche 42 bzw. 44 gebildet, welche zusammen mit den Griffabschnitten 26, 28 und dem dritten Griffabschnitt 32 und den Schaltelementen 34, 36 eine elliptische Öffnung 46 bzw. 48 bildet. Somit bleibt ausreichend Freiraum für Daumen und die Finger beim Ergreifen der Griffabschnitte 26 bzw. 28 zum Betätigen des Lenkers 14.

In den Griffabschnitten 18, 20 und 30 können Bedientasten für die Funktionen Hupen, Bremsen und/oder Heben und Senken der Lastgabel vorgesehen werden.

## Patentansprüche

1. Flurförderzeug, insbesondere Kommissionierer, mit einem Fahrerstand und einer Hilfskraftlenkung, die einen um eine Achse in einem fahrzeugfesten Lager (12) drehbar gelagerten Lenker (14) umfaßt, der von einem Fahrer auf dem Fahrerstand stehend betätigt wird und der einen ersten Abschnitt (18) zur Betätigung eines' Lenkgebers, seitliche Ansätze (20, 22), die sich annähernd gleichachsig an die gegenüberliegenden Seiten von dem dem Fahrerstand nächstliegenden Bereich des ersten Abschnitts (18) zur Seite fort erstrecken und jeweils einen länglichen Griffabschnitt (26, 28) an den Enden des zugeordneten Ansatzes (20, 22) aufweist, die sich vom Ansatz (20, 22) fort erstrecken, **dadurch gekennzeichnet,**
- **daß** der erste Abschnitt (18) um eine zum Fahrer hin geneigte Achse drehbar gelagert ist und eine abgeflachte obere Fläche aufweist, die zum Fahrer hin geneigt ist,
- die Griffabschnitte (26, 28) sich vom zugeordneten Ansatz (20, 22) ausgehend aufeinander zu erstrecken, wobei der Neigungswinkel der Achse und die Erstreckung der Griffabschnitte (26, 28) derart sind, daß der Fahrer, auf dem Fahrerstand stehend, die Griffabschnitte (26, 28) von der Außenseite mit annähernd aufrechten Fäusten erfaßt und eine durch Druck oder Zug erzeugte Kraft im wesentlichen keine Drehkraft um die Achse verursacht,
- **daß** ferner ein ringförmiges drehbares Schaltelement (34, 36) am freien Ende des zugeordneten Griffabschnitts (26, 28) mit dem Daumen der den Griffabschnitt erfassenden Hand betätigbar ist und daß
- ein speichenförmiger Abschnitt (30), der sich vom ersten Abschnitt (18) zwischen den Griffabschnitten (26, 28) und im seitlichen Abstand zu diesen fort erstreckt, in einem quer dazu verlaufenden ringabschnittsförmigen dritten Griffabschnitt (32) übergeht, dessen freie Enden an die ringförmigen Schaltelemente (34, 36) angrenzen und eine Fortsetzung der beiden seitlichen Griffabschnitte (26, 28) bilden, wobei die Außenseite des dritten Griffabschnitts (32) eine im wesentlichen durchgehende konvexe Fläche aufweist.

2. Flurförderzeug nach Anspruch 1, **dadurch gekennzeichnet, daß** die Drehachsen der ringförmigen Schaltelemente (34, 36) einen Winkel von 90° einschließen.

3. Flurförderzeug nach Anspruch 1 oder 2, **dadurch gekennzeichnet, daß** die Drehachse des Lenkers (14) etwa in Richtung der Schultern des auf dem Fahrerstand vor dem Lenker (14) stehenden Fahrers weist.

4. Flurförderzeug nach einem der Ansprüche 1 bis 3, **dadurch gekennzeichnet, daß** die Griffabschnitte (26, 28) im Querschnitt rund und in Längsrichtung bogenförmig gestaltet sind, wobei die äußere Krümmung konvex und die innere konkav ist.

5. Flurförderzeug nach einem der Ansprüche 1 bis 4, **dadurch gekennzeichnet, daß** die dem Fahrer zugekehrten Seiten des ersten Abschnitts (18) und der Ansätze (20, 22) eine durchgehende Fläche (24) bilden, die leicht konvex gekrümmt ist.

6. Flurförderzeug nach Anspruch 4 oder 5, **dadurch gekennzeichnet, daß** die Griffabschnitte (26, 28) annähernd auf einem Kreis liegen, dessen Zentrum von der Drehachse (16) des Lenkers (14) gebildet ist.

7. Flurförderzeug nach einem der Ansprüche 1 bis 5, **dadurch gekennzeichnet, daß** auf den Lenker (14) bezogen, die Griffpositionen annähernd bei 10 und 14 Uhr liegen.

8. Flurförderzeug nach einem der Ansprüche 1 bis 7, **dadurch gekennzeichnet, daß** die ringförmigen Schaltelemente (34, 36) eine Griffmulde (38, 40) für den Daumen aufweisen.

9. Flurförderzeug nach einem der Ansprüche 1 bis 8, **dadurch gekennzeichnet, daß** die ringförmigen Schaltelemente (34, 36) auf der dem Fahrer abgewandten Seite eine Rauhung aufweisen.

10. Flurförderzeug nach einem der Ansprüche 1 bis 9, **dadurch gekennzeichnet, daß** zwischen den ersten Griffabschnitten (26, 28), dem ersten Abschnitt (18), dem speichenförmigen Abschnitt (30) und dem dritten Griffabschnitt (32) jeweils eine elliptische Öffnung (46, 48) gebildet ist.

11. Fluförderzeug nach einem der Ansprüche 1 bis 10, **dadurch gekennzeichnet, daß** der Querschnitt des dritten Griffabschnitts (32) annähernd rund ist.

12. Flurförderzeug nach einem der Ansprüche 1 bis 11, **dadurch gekennzeichnet, daß** der dritte Griffabschnitt (32) gegenüber dem speichenförmigen Abschnitt (30) erhaben ist.

13. Flurförgerzeug nach einem der Ansprüche 1 bis 12, **dadurch gekennzeichnet, daß** der Schwenkwinkel des Lenkers (14) annähernd ± 120° beträgt.

14. Flurförderzeug nach einem der Ansprüche 1 bis 13, **dadurch gekennzeichnet, daß** die Anordnung des dritten Griffabschnitts (32) und der ringförmigen Schaltelemente (34, 36) derart ist, daß das zugeordnete Schaltelement (34, 36) mit dem Daumen der Hand betätigt werden kann, die den dritten Griffabschnitt (32) in der 12 Uhr-Position durch Ergreifen von außen und/oder oben erfaßt.

## Claims

1. Industrial truck, in particular order picker, with an operator's platform and power assisted steering which comprises a steering wheel (14) rotatably mounted about an axis in a bearing (12) fixed to the vehicle and which is actuated by an operator standing on the operator's platform and which comprises a first portion (18) for actuating a steering device, lateral projections (20, 22) which substantially coaxially extend to the side on opposing sides of the region of the first portion (18) located adjacent to the operator's platform and one respective elongate grip portion (26, 28) at the ends of the associated projection (20, 22), which extend away from the projection (20, 22),
**characterised**
- **in that** the first portion (18) is rotatably mounted about an axis inclined toward the operator and comprises a flattened upper surface which is inclined toward the operator,
- the grip portions (26, 28) are to extend toward one another emerging from the associated projection (20, 22), the inclination angle of the axis and the extension of the grip portions (26, 28) being such that when standing on the operator's platform, the operator grasps the grip portions (26, 28) from the outside with substantially upright fists and a force generated by compression or traction causes substantially no torsional force about the axis,
- **in that** moreover an annular rotatable switching element (34, 36) at the free end of the associated grip portion (26, 28) may be actuated by the thumb of the hand grasping the grip portion and in that
- a spoke-shaped portion (30) which extends away from the first portion (18) between the grip portions (26, 28) and laterally spaced therefrom, merges with an annular-portion-shaped third grip portion (32) extending transversely thereto, the free ends of which bordering the annular switching elements (34, 36) and forming an extension of the two lateral grip portions (26, 28), the exterior of the third grip portion (32) comprising a substantially continuous convex surface.

2. Industrial truck according to claim 1, **characterised in that** the axes of rotation of the annular switching elements (34, 36) encompass an angle of 90°.

3. Industrial truck according to claim 1 or 2, **characterised in that** the axis of rotation of the steering wheel (14) faces approximately in the direction of the shoulders of the operator standing on the operator's platform in front of the steering wheel (14).

4. Industrial truck according to any one of claims 1 to 3, **characterised in that** the grip portions (26, 28) are of round cross-section and arcuate in the longitudinal direction, the outer curvature being convex and the inner curvature being concave.

5. Industrial truck according to any one of claims 1 to 4, **characterised in that** the sides of the first portion (18) and the projections (20, 22) facing toward the operator form a continuous surface (24) which is slightly curved in a convex manner.

6. Industrial truck according to claim 4 or 5, **characterised in that** the grip portions (26, 28) are located approximately on a circle, the centre of which being formed by the axis of rotation (16) of the steering wheel (14).

7. Industrial truck according to any one of claims 1 to 5, **characterised in that**, relative to the steering wheel (14), the grip positions are located substantially at 10 and 2 o'clock.

8. Industrial truck according to any one of claims 1 to 7, **characterised in that** the annular switching elements (34, 36) comprise a grip recess (38, 40) for the thumb.

9. Industrial truck according to any one of claims 1 to 8, **characterised in that** the annular switching elements (34, 36) comprise a rough portion on the side facing away from the operator.

10. Industrial truck according to any one of claims 1 to 9, **characterised in that** between the first grip portions (26, 28) the first portion (18) the spoke-shaped portion (30) and the third grip portion (32) an elliptical aperture (46, 48) is respectively formed.

11. Industrial truck according to any one of claims 1 to 10, **characterised in that** the cross-section of the third grip portion (32) is substantially round.

12. Industrial truck according to any one of claims 1 to 11, **characterised in that** the third grip portion (32) is raised relative to the spoke-shaped portion (30) .

13. Industrial truck according to any one of claims 1 to 12, **characterised in that** the pivot angle of the steering wheel (14) is substantially ±120°.

14. Industrial truck according to any one of claims 1 to 13, **characterised in that** the arrangement of the third grip portion (32) and the annular switching elements (34, 36) is such that the associated switching element (34, 36) may be actuated by the thumb of the hand which grasps the third grip portion (32) in the 12 o'clock position by gripping from outside and/or from above.

## Revendications

1. Véhicule de manutention au sol, en particulier chariot de préparation des commandes, muni d'un poste de conducteur et d'une direction assistée, qui comporte un dispositif de direction (14), monté tournant autour d'un axe dans un palier (12) solidaire du véhicule, qui est actionné par un conducteur debout sur le poste de conduite, et qui présente un premier élément (18) pour actionner un dispositif de guidage, des prolongements latéraux (20, 22) qui s'étendent sensiblement selon le même axe sur les côtés opposés de la zone du premier élément (18) la plus proche du poste de conduite, en s'éloignant sur le côté, et qui chacun présentent un élément de poignée (26, 28) allongé, aux extrémités du prolongement latéral (20, 22) correspondant, en continuant le prolongement (20, 22),
**caractérisé en ce que**
- le premier élément (18) est monté tournant autour d'un axe incliné vers le conducteur, et présente une surface supérieure aplatie qui est inclinée vers le conducteur,
- les éléments de poignées (26, 28) s'étendent l'un vers l'autre à partir du prolongement latéral associé (20, 22), l'angle d'inclinaison de l'axe et l'extension des éléments de poignées (26, 28) étant tels que le conducteur, debout sur le poste de conduite, saisisse les éléments de poignées (26, 28) depuis le côté extérieur avec ses pouces sensiblement redressés et ne crée sensiblement autour de l'axe aucune force de rotation produite par pression ou par traction,
- **en ce que**, de plus, un organe de commutation de forme annulaire, tournant, (34, 36) à l'extrémité libre de l'élément de poignées correspondant (26, 28), peut être actionné avec le pouce de la main tenant l'élément de poignée, et
- **en ce qu'**un élément (30), en forme de rayon, qui s'étend depuis le premier élément (18), entre les éléments de poignées (26, 28), et en étant éloigné à une certaine distance latérale de ceux-ci, se prolonge en une troisième partie de poignée (32) formant une partie d'anneau et ayant un tracé en travers de ceux-ci, tandis que les extrémités libre de cette troisième partie de poignée (32) sont en limite des éléments de commutation (34, 36) formant l'anneau, et qu'elles constituent un prolongement des deux éléments de poignées latéraux (26, 28), la face extérieure de la troisième partie de poignée (32) présentant une surface convexe essentiellement continue.

2. Véhicule de manutention au sol suivant la revendication 1, **caractérisé en ce que** les axes de rotation des éléments de commutation (34, 36) incluent un angle de 90°.

3. Véhicule de manutention au sol suivant la revendication 1 ou 2, **caractérisé en ce que** l'axe de rotation du dispositif de direction (14) est tourné sensiblement en direction des épaules du conducteur debout sur le poste de conduite devant le dispositif de direction (14).

4. Véhicule de manutention au sol suivant l'une des revendications 1 à 3, **caractérisé en ce que** les éléments de poignées (26, 28) sont conçus avec une section ronde et en formant un arc dans le sens longitudinal, la courbure extérieure étant convexe et la courbure intérieure étant concave.

5. Véhicule de manutention au sol suivant l'une des revendications 1 à 4, **caractérisé en ce que** les faces, tournées vers le conducteur, du premier élément (18) et des prolongements (20, 22) forment une surface continue (24) qui présente une courbure légèrement convexe.

6. Véhicule de manutention au sol suivant la revendication 4 ou 5, **caractérisé en ce que** les éléments de poignées (26, 28) se trouvent sensiblement sur un cercle, dont le centre est formé par l'axe de rotation (16) du dispositif de direction (14).

7. Véhicule de manutention au sol suivant l'une des revendications 1 à 5, **caractérisé en ce que**, par rapport au dispositif de direction (14), les positions des poignées sont sensiblement à 10 heures et à 14 heures.

8. Véhicule de manutention au sol suivant l'une des revendications 1 à 7, **caractérisé en ce que** les éléments de commutation (34, 36) formant anneau présentent une cuvette de poignée (38, 40) pour les pouces.

9. Véhicule de manutention au sol suivant l'une des revendications 1 à 8, **caractérisé en ce que** les éléments de commutation (34, 36) formant anneau présentent une rugosité sur la face opposée au conducteur.

10. Véhicule de manutention au sol suivant l'une des revendications 1 à 9, **caractérisé en ce que**, entre les premiers éléments de poignées (26, 28), le premier élément (18), l'élément en forme de rayon (30) et le troisième élément de poignée (32), une ouverture elliptique (46, 48) est chaque fois formée.

11. Véhicule de manutention au sol suivant l'une des revendications 1 à 10, **caractérisé en ce que** la section du troisième élément de poignée (32) est sensiblement ronde.

12. Véhicule de manutention au sol suivant l'une des revendications 1 à 11, **caractérisé en ce que** le troisième élément de poignée (32) est en dessus de l'élément en forme de rayon (30).

13. Véhicule de manutention au sol suivant l'une des revendications 1 à 12, **caractérisé en ce que** l'angle de basculement du volant de direction (14) est sensiblement de ± 120°.

14. Véhicule de manutention au sol suivant l'une des revendications 1 à 13, **caractérisé en ce que** la disposition du troisième élément de poignée (32) et des éléments de commutation (34, 36) formant anneau est telle que l'élément de commutation associé (34, 36) puisse être actionné avec le pouce de la main qui tient le troisième élément de poignée (32) dans la position 12 heures en le saisissant depuis l'extérieur et/ou depuis le haut.
